# EUROPEAN PATENT SPECIFICATION

(11) **EP 0 683 741 B1**
(45) Date of publication and mention of the grant of the patent: **16.04.1997**
(21) Application number: 94908523.7
(22) Date of filing: 21.02.1994
(51) Int. Cl.: B62D 21/02, B62D 23/00, B62D 25/08

(54) **STRUCTURAL SUB-ASSEMBLY**
KONSTRUKTIONSTEIL
SOUS-ENSEMBLE PORTEUR

(30) Priority: 22.02.1993 NO 930618
(43) Date of publication of application: 29.11.1995
(73) Proprietor: NORSK HYDRO A/S, 0240 Oslo 2 (NO)
(72) Inventor: CLAUSEN, Edvin, List, DK-6270 Tonder (DK); GUNDLACH, Peter, N-2830 Raufoss (NO)
(74) Representative: Bleukx, Luc
(86) International application number: NO9400044
(87) International publication number: WO9419227

(56) References cited:
- WO-A-90/02680
- DE-C- 765 683
- US-A- 2 113 399
- US-A- 3 264 010

## Description

The present invention relates to a structural sub-assembly of a vehicle body, and more particularly to an improved joint between longitudinally extending structural members and interconnected transversal members in such assembly, e.g. the front structure of a vehicle.

Conventionally such assemblies, comprising e.g. longitudinal front or rear members and transversally extending cross-members in a vehicle frame are provided by welding of the members, or combined use of special adapted connectors, e.g. castings and welding, in order to reinforce the joint area of the members joined under a substantially right angle. However these joints, exposed to large impact forces due to a front or rear collision of the vehicle, do not always give an adequate support to the front and rear members, respectively in case of a collision. Typically, the longitudinal front/rear members prior to joining to a side member will achieve a curved (bent) configuration in order to accomodate the front/rear vehicle wheel. Such bent area of the members has an inherent tendency to extensive buckling under collision and consequently represents a danger of (joint rupture with) penetration of the buckled/loosened members into the passenger cabin and injury hazard for the occupants of the vehicle.

It is therefore an object of the present invention to provide a novel reinforced assembly of the longitudinal and transversal structural members avoiding the above disadvantages inherent to previously known joints and avoiding danger of excessive buckling of the longitudinal members in case of collision.

A further object of the invention is to provide an assembly ensuring a better distribution of the load between the longitudinal and transversal members in case of a frontal collision.

The above and other objects are achieved in accordance with the present invention by provision of a new structural assembly comprising longitudinally extending members and interconnected transversal members, the members being joined by means of longitudinally nested joints formed by bending of the end parts of the transversal members and their aligning with complementary shaped longitudinal members.

In a particularly advantageous embodiment of the assembly according to the present invention the longitudinally nested joints exhibit a various dimension over their extension.

Other objects, specific features and advantages of the present invention will be apparent from the following detailed description of preferred embodiments with reference to the accompanying drawings, Figs. 1-7, where
- Fig. 1: is a schematic partial top view of an assembly employable in the present invention,
- Fig. 2: is a schematic partial top view of a particular embodiment of the assembly, and
- Figs. 3-7: illustrate in a cross-sectional view various configurations of structural members employable in the present invention.

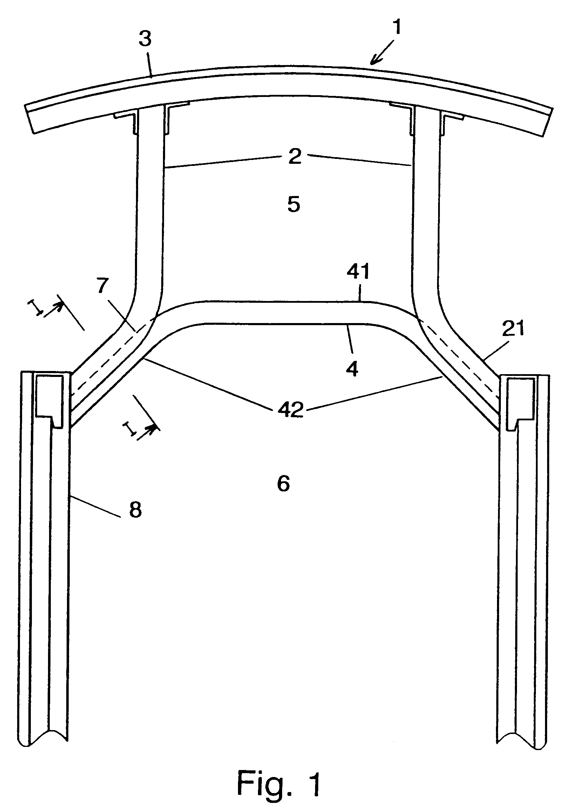

Referring to the drawings and particularly to Fig. 1 which schematically illustrates in a partial top view a sub-assembly 1 applied as a front structure in a vehicle body, the sub-assembly comprises a pair of substantially parallelly and longitudinally extending front members 2 attached to a transversally extending bumper 3 and a cross-member 4 delimiting an engine area (space) 5 from the passenger cabin 6 of the vehicle.

The cross-member 4 comprises a substantially straight part 41 extending between its end parts 42, the end parts 42 being bent parallelly to and aligned with a predetermined part 21 of the longitudinal front members 2. Longitudinally nested joints 7 between the longitudinal 2 and transversal 4 members are achieved due to complementary shaped, typically extruded members and/or partial removal of their adjacent walls over a joining area. Connection between the members is further secured by any conventional means, e.g. welding, and this applies also for connection of the sub-assembly (front/rear structure) 1 to the side member 8 of the vehicle frame, thus ensuring an optimal integral triple joint interconnection between the side member (sill) 8, the front/rear member 2 and the transversal member 4.

This particular configuration of the joints ensures a significant reinforcing of the longitudinal members and thus relief for impact forces so that buckling and possible rupture of the connection is avoided due to distribution of load between the longitudinal and transversal members.

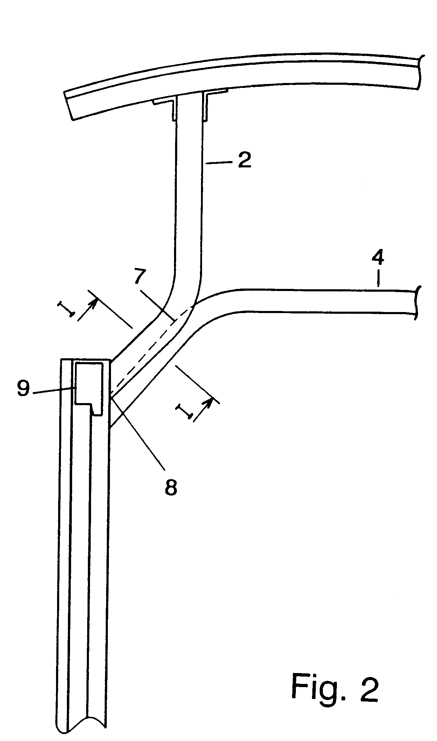

Fig. 2 illustrates schematically in a partial broken top view a particularly advantageous embodiment of the assembly. The longitudinally nested joint 7 between the cross-member 4 and front member 2 exhibits an increasing dimension towards the joining area with side member 8 and an A-post 9 vertically extending from the side member. In this way an optimal reinforced joint between the members 2,4,8 is achieved having the largest cross-section (and contact area to the side member) where the load under collision is largest.

Furthermore, this optimized arrangement/configuration of the joint provides also for better room in the area of the passenger cabin where it is needed for displacement of operating/control means (clutch, brake, gas foot paddles).

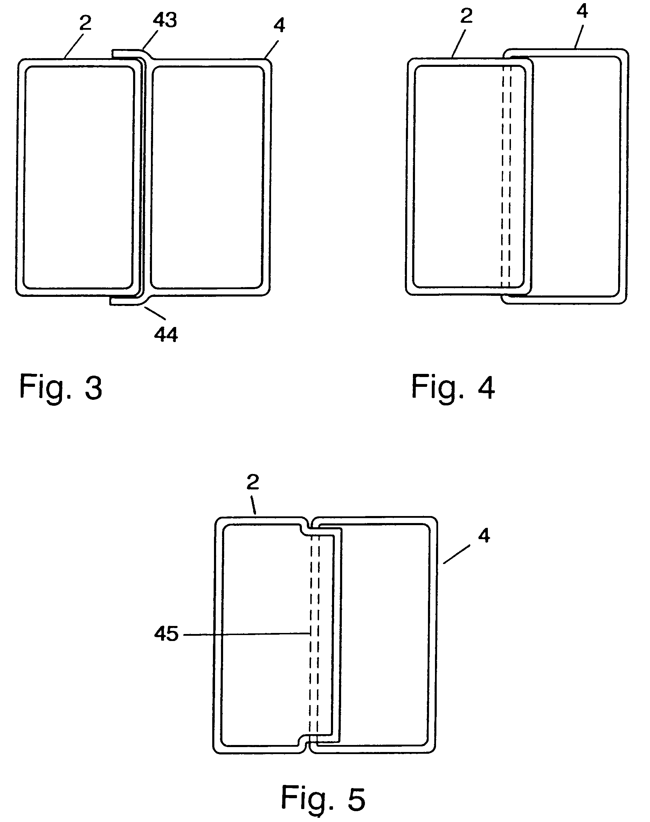

Figs. 3-7 illustrate in a cross-sectional view taken along line I-I in Figs. 1 or 2 various configurations of nested longitudinal and transversal members, both members being typically provided as closed shapes (box sections) extruded in light metal, e.g. in aluminium or Al-alloys.

Fig. 3 shows a side by side arrangement of the joined members 2,4 where the cross-member 4 partially encompasses the front member 2 by means of outwardly longitudinally extending flanges 43,44. Both members are provided as closed shapes.

Figs. 4 and 5 are two alternative embodiments of the above arrangement illustrating a single chamber cross-member 4 accomodating the front member 2 by partial removal of the adjacent wall over a predetermined extension of the joint.

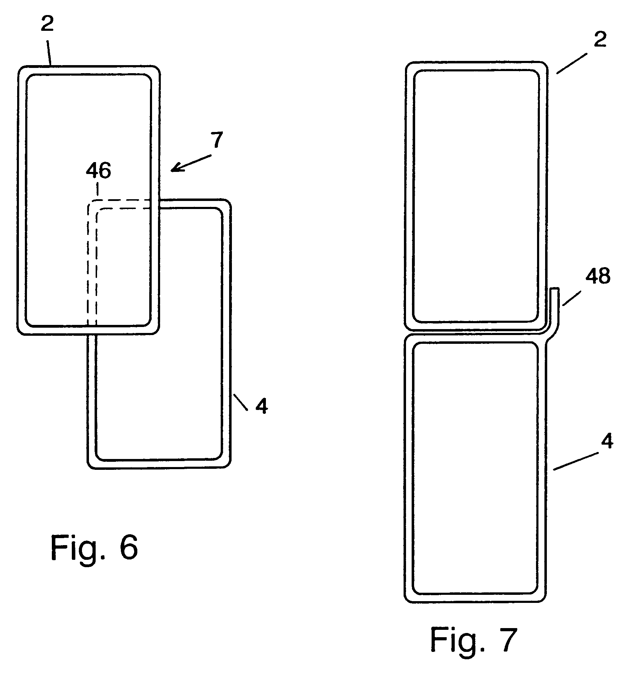

Another particular configuration of the nested joint 7 between the members 2,4 is schematically shown in Fig. 6. The members are arranged in a staggered pattern. The cross-member 4 exhibits a partially removed corner wall part 46 in order to accomodate the front member 2 over the joint extension. The cross-member 4 could in a similar way be positioned above front member 2.

Fig. 7 shows finally another embodiment of the longitudinally nested joint 7 by a vertical arrangement of the members 2,4 provided as single chamber box shapes, the "bearing" cross-member 4 exhibiting a supporting longitudinal flange 48.

## Claims

1. A structural sub-assembly (1) of a vehicle body comprising longitudinally extending structural members (2) and interconnected transversal members (4),
**characterized in** that
at least one of the transversal member(s) (4) is provided as an integral extruded member comprising a substantially straight central part (41) extending between end parts (42) and where the end parts (42) are bent and aligned with complementary shaped longitudinal members (2) forming a longitudinally nested joint (7) over a predetermined extension of the longitudinal members, and where the resulting joint (7) represents an integral part of interconnection with a side member (8) of the vehicle body.

2. The structural assembly according to claim 1,
**characterized in** that
the longitudinally extending members (2) are front or rear members and the transversal member (4) is a cross-member in a vehicle body structure, and where the longitudinally nested joint (7) exhibits an increasing dimension towards a joining area on the side member (8).

3. The structural assembly according to claim 1 or 2,
**characterized in** that
the longitudinal members (2) and the transversal members (4) are aligned in a side by side pattern over the nested joint (7).

4. The structural assembly according to claim 1 or 2,
**characterized in** that
part of the adjacent walls of the aligned members (2,4) is removed over the extension of the nested joint (7).

5. The structural assembly according to claim 4,
**characterized in** that
the longitudinal members (2) and the transversal members (4) are vertically arranged in a staggered pattern over the nested joint (7) extension.

6. The structural assembly according to one or more preceding claims,
**characterized in** that
the transversal members (4) are provided as extruded closed shapes.

## Patentansprüche

1. Konstruktionsteil (1) eines Fahrzeugkörpers aus sich in Längsrichtung erstreckenden strukturellen Gliedern (2) und aus damit verbundenen querverlaufenden Gliedern (4), dadurch gekennzeichnet, daß mindestens eines der querverlaufenden Glieder (4) als ein integral extrudiertes Glied vorgesehen ist, welches aus einem im wesentlichen geraden zentralen Teil (41) besteht, das sich zwischen Endteilen (42) erstreckt, und daß die Endteile (42) gebogen und ausgerichtet werden auf komplementär geformte längsverlaufende Glieder (2) die über eine vorherbestimmte Ausdehnung der längsverlaufenden Glieder hinweg eine in der Längsrichtung ineinander greifende Verbindung (7) bilden, und daß die sich daraus ergebende Verbindung (7) einen integralen Teil der gegenseitigen Verbindung mit einem Seitenglied (8) des Fahrzeugkörpers darstellt.

2. Konstruktionsteil gemäß Patentanspruch 1, dadurch gekennzeichnet, daß die sich in Längsrichtung erstreckenden Glieder (2) vorderseitige oder rückseitige Glieder sind und das querverlaufende Glied (4) ein Kreuzglied in einer Fahrzeugkörperstruktur ist, und daß die in der Längsrichtung ineinander greifende Verbindung (7) eine wachsende Dimension in Richtung auf einen verbindenden Bereich aufdem Seitenglied (8) hin aufweist.

3. Konstruktionsteil gemäß Patentanspruch 1 oder 2, dadurch gekennzeichnet, daß die längsverlaufenden Glieder (2) und die querverlaufenden Glieder (4) in einem nebeneinander angeordneten Muster über die ineinander greifende Verbindung (7) hinweg ausgerichtet sind.

4. Konstruktionsteil gemaß Patentanspruch 1 oder 2, dadurch gekennzeichnet, daß ein Teil der benachbarten Wände der ausgerichteten Glieder (2, 4) über die Ausdehnung der ineinander greifenden Verbindung (7) hinweg weggenommen wird.

5. Konstruktionsteil gemäß Patentanspruch 4, dadurch gekennzeichnet, daß die längsverlaufenden Glieder (2) und die querverlaufenden Glieder (4) senkrecht in einem gestaffelten Muster über die Ausdehnung der ineinander greifenden Verbindung (7) hinweg angeordnet werden.

6. Konstruktionsteil gemaß dem einen oder dem anderen der vorhergehenden Patentansprüche, dadurch gekennzeichnet, daß die querverlaufenden Glieder (4) als extrudierte, geschlossene Formen vorgesehen sind.

## Revendications

1. Sous-ensemble porteur (1) pour un corps de véhicule comportant des membres structuraux d'extension longitudinale (2) et des membres transversaux (4) reliés à ces derniers, caractérisé en ce qu'au moins l'un des membres transversaux (4) est constitué par un membre intégral extrudé, comportant une partie centrale substantiellement droite (41) s'étendant entre des parties terminales (42), en ce que les parties terminales (42) sont pliées et alignées sur des membres longitudinaux façonnés de manière complémentaire (2) formant une jonction emboîtée longitudinalement (7) sur une extension prédéterminée des membres longitudinaux et en ce que la jonction résultante (7) représente une partie intégrale d'interconnexion avec un membre latéral (8) du corps de véhicule.

2. Ensemble porteur selon la revendication 1, caractérisé en ce que les membres d'extension longitudinale (2) sont des membres frontaux ou arrières et le membre transversal (4) est une traverse dans une structure de corps de véhicule, et en ce que la jonction emboîtée longitudinalement (7) expose une dimension croissante en direction d'une superticie de jonction sur le membre latéral (8).

3. Ensemble porteur selon la revendication 1 ou 2, caractérisé en ce que les membres longitudinaux (2) et les membres transversaux (4) sont alignés suivant un modèle côte-à-côte par-dessus l'extension de la jonction emboîtée (7).

4. Ensemble porteur selon la revendication 1 ou 2, caractérisé en ce qu'une partie des parois adjacentes des membres alignés (2, 4) est enlevée sur l'extension de la jonction emboîtée (7).

5. Ensemble porteur selon la revendication 4, caractérisé en ce que les membres longitudinaux (2) et les membres transversaux (4) sont arrangés verticalement suivant un modèle échelonné par-dessus l'extension de la jonction emboîtée (7).

6. Ensemble porteur selon l'une ou plusieurs des revendications précédentes, caractérisé en ce que les membres transversaux (4) sont prévus comme formes fermées extrudées.
